# FASCICULE DE BREVET EUROPEEN

(11) **EP 0 369 859 B1**
(45) Date de publication et mention de la délivrance du brevet: **22.02.1995**
(21) Numéro de dépôt: 89403076.6
(22) Date de dépôt: 08.11.1989
(51) Int. Cl.: G11B 15/32, G11B 23/087

(54) **Dispositif pour l'entrainement sans jeu d'une bobine de cassette à bande magnétique.**
Verfahren zum spielfreien Antrieb einer magnetischen Bandkassette
Device for the backlash-free driving of a magnetic-tape cassette reel

(30) Priorité: 15.11.1988 FR 8814786
(43) Date de publication de la demande: 23.05.1990
(73) Titulaire: SCHLUMBERGER INDUSTRIES, F-92120 Montrouge (FR)
(72) Inventeur: Abeille, Pierre, F-92160 Antony (FR); Bredif, Didier, F-94270 Kremlin-Bicetre (FR)
(74) Mandataire: Dupont, Henri

(56) Documents cités:
- EP-A- 0 205 951
- EP-A- 0 270 375
- DE-A- 1 927 531
- FR-A- 2 131 729
- GB-A- 2 029 372
- US-A- 3 083 927
- US-A- 3 322 365

## Description

La présente invention concerne un dispositif pour entraîner sans jeu une bobine de cassette à bande par rapport aux moyens d'entrainement, d'un enregistreur à bande magnétique.

Les enregistreurs/lecteurs (appelés par la suite enregistreurs) de bande magnétique à cassette, connus en soi, sont usuellement pourvus d'un système de mise en place de la cassette, apte à mettre en position relative le noyau de chaque bobine et le pignon entraineur correspondant, tout en permettant le chargement/déchargement de la cassette. De tels systèmes connus comprennent un réceptable de forme complémentaire de celle de la cassette, et par l'ouverture duquel est introduite la cassette, un mécanisme assurant le déplacement du réceptacle entre une position inactive (déchargée) et une position active (chargée), et des moyens presseurs aptes à appliquer sur le noyau de chaque bobine une force axiale, de façon à maintenir celui-ci en butée sur le pignon d'entraînement et éviter toute translation axiale relative entre ces deux organes.

On connait des moyens presseurs faisant appel à une languette élastique, solidaire du réceptable par une extrémité et portant, par l'autre extrémité, sur le noyau de la bobine.

Ces moyens connus sont relativement peu efficaces, (la force exercée est relativement faible), et fragiles, et ce d'autant plus qu'ils font saillie à l'extérieur du plan de la face du réceptable de cassette ; en outre, ils nécessitent de faire appel à des cassettes de structure particulière.

Ces défauts sont encore plus difficilement acceptables lorsque l'enregistreur fonctionne en environnement sévère.

On sait que les enregistreurs magnétiques à cassette doivent assurer un entrainement précis et fiable de la bande, et ce d'autant plus que les conditions d'utilisation sont sévères (vibrations, accélérations, chocs, variations de température, etc.). Ceci implique notamment que les pignons d'entrainement entraînent sans jeu les bobines.

Or, les dispositifs d'entrainement connus (Voir, par exemple, le document EP-A-0205951), du type à cannelures, ne permettent pas d'atteindre ce but.

Le document FR-A-2,131,729, qui concerne le problème de l'entrainement en rotation d'une bobine, décrit un dispositif d'entraînement en rotation d'une bobine comprenant un moyeu logé dans un évidement de ladite bobine et comportant sur sa face supérieure un ou plusieurs ergots d'accouplement qui dépassent axialement, de préférence à la même distance radiale de l'axe et avec un espacement angulaire régulier. L'évidement de la bobine présente une extrémité ouverte et une extrémité opposée qui est fermée par un fond. Selon ce document, les ergots sont destinés à s'engager dans des trous du fond et ont une forme particulière qui leur permet de maintenir la bobine contre le moyeu au cours de la mise en service de ladite bobine.

Un premier objet de l'invention est de permettre l'entrainement sans jeu de bobines de cassette à bande.

A cette fin, selon l'invention, le dispositif pour l'entrainement en rotation d'une bobine de cassette à bande, ledit dispositif étant du type comprenant un pignon d'entrainement pourvu d'au moins un doigt d'entrainement apte à coopérer avec des rainures axiales prévues sur la bobine, et la largeur du doigt étant légèrement inférieure à celle des rainures, est caractérisé en ce que ledit dispositif comprend des moyens de calage aptes à exercer une force tangentielle sur la bobine, afin de maintenir en butée ledit doigt contre une face de la rainure correspondante.

Selon une forme de réalisation avantageuse, lesdits moyens de calage sont constitués d'une goupille mobile dont l'extrémité porte, en partie, contre le bord d'une rainure par une surface inclinée, de manière que le déplacement de la goupille entraine un déplacement angulaire de la rainure de la bobine.

De préférence, la goupille de calage est apte à se déplacer, sous l'action d'un ressort, suivant une direction axiale.

Avantageusement, la goupille de calage comprend une surface de contact avec la rainure, en forme de cone.

De manière préférentielle, la goupille de calage et ledit doigt d'entrainement sont disposés sensiblement selon un diamètre.

Un second objet de la présente invention est de proposer un dispositif comme décrit ci dessus qui est également apte à bloquer en translation axiale, de manière fiable, une bobine de cassette sur le pignon entraîneur d'un enregistreur/lecteur.

A cette fin, selon une forme avantageuse de réalisation de l'invention, le dispositif comporte une butée axiale contre laquelle est susceptible de porter la bobine, cette dernière étant pourvue d'un logement central et d'au moins un appui faisant saillie radialement vers l'intérieur dudit logement, et ledit dispositif comporte au moins un organe de blocage, lié audit pignon, ledit organe de blocage étant mobile sous l'action de moyens de commande entre une position de repos effacée et une position de blocage où il porte sur l'extrémité axiale dudit appui opposée à ladite butée, afin que la bobine soit également bloquée axialement.

Avantageusement, le dispositif comprend au moins deux couples organe de blocage/appui , disposés selon un diamètre.

De préférence, lesdits organes de blocage portent contre une surface inclinée liée audit pignon, et le dispositif comprend en outre des moyens de rappel desdits organes de blocage vers la position de repos.

Plus précisément, lesdits organes de blocage sont aptes à porter, en position de blocage, à la fois sur ladite surface inclinée et les appuis correspondants.

Selon une forme avantageuse de réalisation, lesdits organes de blocage sont constitués d'un tore en matériau élastique, tel qu'un ressort torique, coaxial audit pignon.

Avantageusement, lesdits moyens de commande comprennent une tige apte à coulisser par rapport audit pignon et porteuse à une extrémité d'un plateau apte à plaquer ledit ressort sur ladite surface inclinée.

Afin de simplifier la réalisation, les appuis sont constitués par les organes entrainés (dents et rainures) de la bobine coopérant avec ledit pignon d'entrainement.

Afin de permettre le contrôle de l'instant du blocage de la bobine par rapport au mouvement de la cassette, lesdits moyens de commande sont reliés à un mécanisme de chargement/déchargement de la cassette.

Plus précisément, les moyens de commande comprennent en outre un levier monté à rotation sur un axe fixe et apte à provoquer le déplacement de la tige en portant contre l'extrémité de cette dernière.

Avantageusement, ledit levier est actionné par une came solidaire dudit mécanisme de chargement/déchargement de la cassette et entraîné par celui-ci.

De préférence, la tige est associée à des moyens de rappel, tels qu'un ressort, vers une position correspondant à la position active des organes de blocage.

L'invention sera bien comprise à la lumière de la description qui suit en référence au dessin annexé, dans lequel :
- la figure 1 est une vue en perspective montrant une cassette, un tambour de têtes et le cheminement de bande d'un enregistreur auquel s'applique l'invention ;
- les figures 2 et 3 sont des schémas montrant de côté le mécanisme de chargement/déchargement de la cassette, respectivement en position déchargée et chargée ;
- la figure 4 est une vue de face du dispositif de la figure 3 incorporant en outre un dispositif de blocage axial ;
- les figures 5 et 6 sont des vues détaillées en coupe du dispositif de blocage axial respectivement en position de repos et de blocage ;
- la figure 7 est une vue en coupe d'un dispositif selon un aspect de l'invention, pour l'entrainement sans jeu d'une bobine ; et
- la figure 8 est une vue de dessus partielle du dispositif de la figure 7.

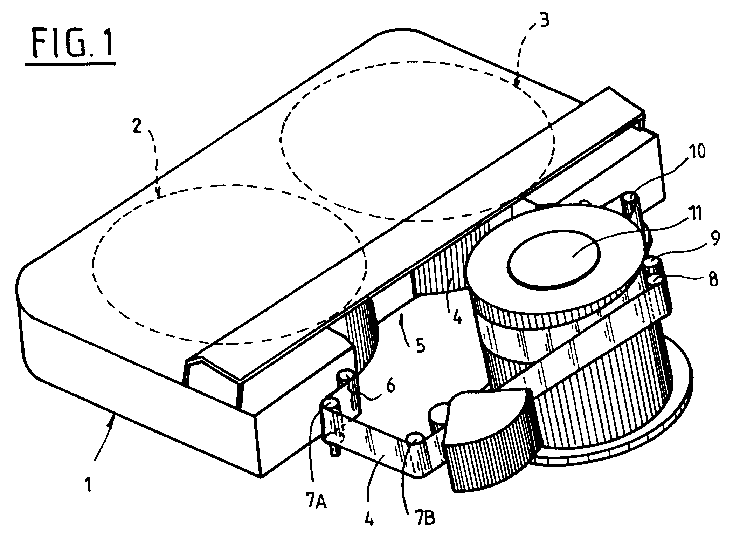

Un exemple d'application du dispositif est représenté sur la figure 1 montrant une vue en perspective partielle et simplifiée d'un enregistreur, du type dit à têtes tournantes.

Une cassette à bande magnétique pourvue de deux bobines, à savoir une bobine réceptrice 2 et une bobine débitrice 3, sur lesquelles une bande 4 est enroulée, est pourvue sur l'une des faces d'une ouverture 5 disposée dans le plan de la bande. Le brin de bande disposé dans l'ouverture 5 est susceptible d'être extrait de la cassette 1 par des galets fixes ou mobiles (tels que les galets 6,7A,7B) disposés de part et d'autre de l'ouverture, puis tirée par des galets de chargement 8,9,10 destinés à placer la bande selon un trajet déterminé autour d'un tambour 11 muni de têtes tournantes (connu en soi).

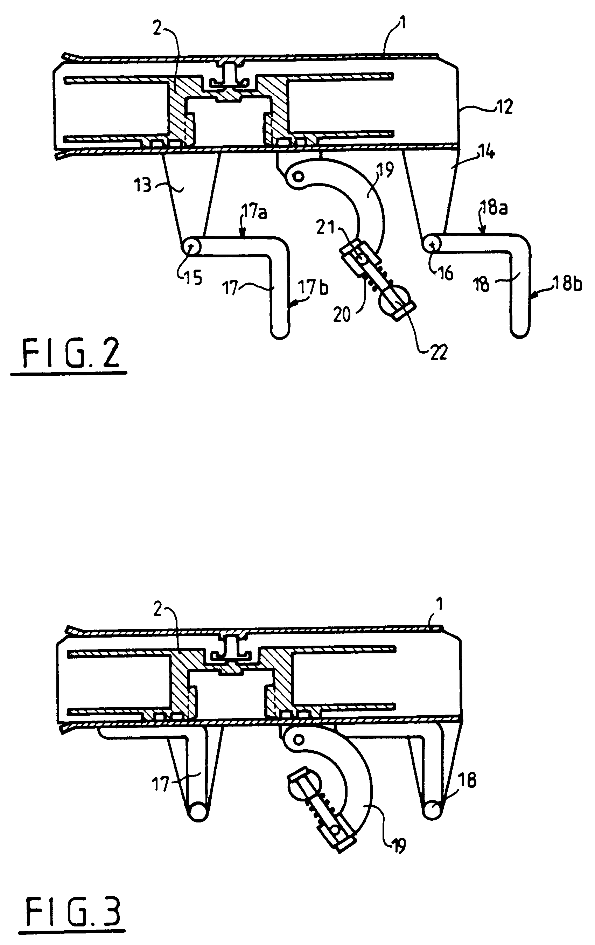

La cassette 1 est disposée dans un réceptacle (non représenté) susceptible d'être amené en position de travail (tel que montrée sur la figure 1) depuis une position de repos de la manière décrite ci-après en relation avec les figures 2 et 3, montrant de coté et en coupe le réceptable et le mécanisme dit de chargement/déchargement de la cassette.

Sur la figure 2, un réceptacle 1, contenant une cassette 12 dont est représentée la seule bobine 2, comprend à sa base au moins 2 pattes verticales 13 et 14 pourvues chacune à leur extrémité d'un coulisseau respectivement 15 et 16 aptes à se déplacer dans des lumières ou glissières complémentaires 17 et 18. Ces dernières présentent un premier trajet horizontal respectivement 17A et 18A suivi
d'un second trajet à angle droit du premier, donc de direction verticale, portant les références respectives 17B et 18B. Il est entendu que la notion de verticalité et horizontalité sont indiquées en référence à la position d'origine du réceptacle et de la cassette représentée en position normalement horizontale. Le mécanisme de chargement/déchargement de la cassette comprend une biellette courbe 19 articulée par une première extrémité à la base du réceptacle 1, et articulée en sa seconde extrémité sur un excentrique 20 autour d'un axe 21, ledit excentrique 20 étant lui-même articulé sur un axe fixe 22 solidaire de l'enregistreur. Le réceptacle est représenté en figure 2 en position de repos, la cassette étant introduite dans ce dernier.

La figure 3 représente le dispositif de la figure 2 dans une position du réceptacle correspondant à la position de travail montrée sur la figure 1. On voit que le réceptacle 1 a subi une translation horizontale et une translation verticale correspondant aux trajets 17a, 18a, 17b, 18b de la figure 2 ; l'excentrique 20 a pivoté autour de l'axe fixe 22.

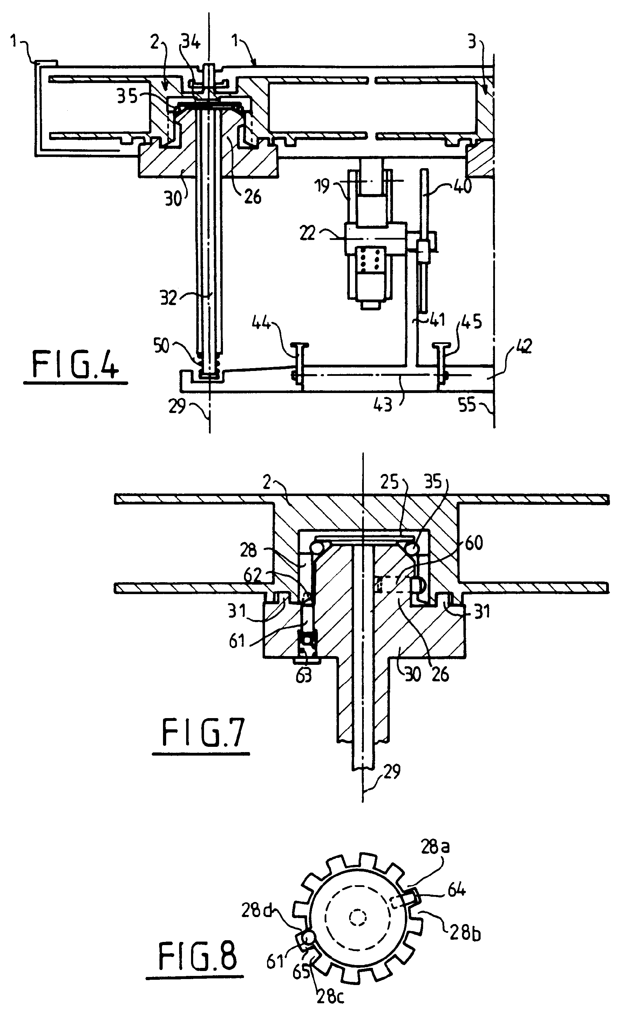

La figure 4 montre en coupe axiale le dispositif permettant de bloquer axialement la bobine de la cassette par rapport au dispositif d'entrainement de celle-ci.

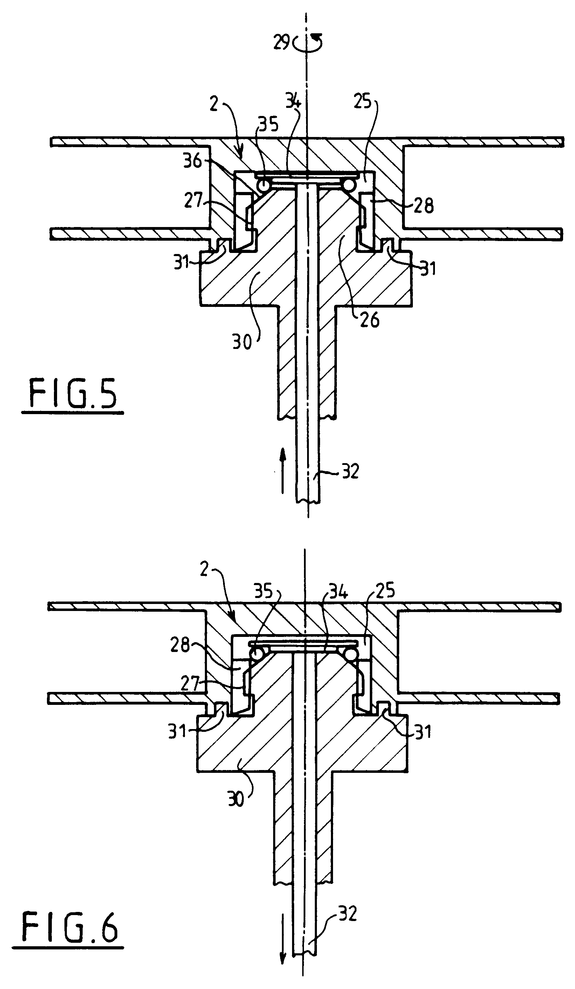

Ce dernier est constitué d'un pignon d'entrainement comportant des cannelures (connues en soi). Ledit pignon est entrainé en rotation par des moyens d'entrainement connus en eux-mêmes (tel qu'un moteur) et non représentés. On a représenté sur les figures 5 et 6 des vues schématiques en coupe d'une bobine et du dispositif de blocage.

La bobine 2 comporte de manière connue un évidement central 25 apte à recevoir un pignon d'entrainement 26 comportant des cannelures 27. L'intérieur du logement 25 est pourvue sur sa paroi axiale, de cannelures 28 complémentaires des cannelures prévues sur le pignon d'entrainement 26. Le pignon d'entrainement comprend également une embase 30 pourvue d'organes de butée 31 contre lesquels est susceptible de porter la base de la bobine 2. Sur les figures 5 et 6, la bobine 2 est représentée dans la position de la cassette correspondant à la position de travail de la figure 1.

Les moyens de blocage de la bobine sur le pignon d'entrainement 26 comprennent une tige 32, coaxiale au pignon d'entrainement, et pourvue à son extrémité supérieure d'un plateau ou disque 34. Le logement coaxial 25 prévu sur la bobine 2 est de forme générale cylindrique et présente une dimension suivant l'axe 29 telle qu'un espace libre est ménagé entre l'extrémité supérieure du pignon et la paroi supérieure du logement. Dans cet espace est apte à venir se loger le disque 34 solidaire de la tige 32 et un tore en matériau élastique, tel qu'un ressort torique 35 de diamètre sensiblement égal à celui du disque 34. L'extrémité supérieure du pignon d'entrainement comprend une surface conique contre laquelle est apte à porter le ressort torique 35. Le disque 34 est avantageusement pourvu d'un épaulement circulaire contre lequel vient porter le ressort torique 35 de manière à limiter le mouvement de ce dernier vers le centre.

En position de repos, telle que représentée sur la figure 5, la tige 32 est en position haute, le plateau ou disque 34 porte contre le fond du logement et le ressort torique
présente un diamètre minimal limité par les épaulements prévus sur le disque 34.

Sous l'effet d'une force axiale (engendrée par un dispositif décrit ci-après), la tige 32 se déplace verticalement selon un mouvement descendant entrainant le disque 34 qui lui est solidaire, et provoque une extension radiale du ressort torique 35. En effet, celui-ci portant sur les surfaces coniques 36 et étant soumis à une force verticale descendante, subit un déplacement radial, ce qui provoque l'augmentation de son diamètre ; le ressort torique vient ainsi porter contre la partie supérieure des cannelures 28 de la bobine 2. Le mouvement de la tige 32 est limité par l'appui du disque 34 sur la partie supérieure du pignon d'entrainement 26. Le dispositif est alors dans une position de blocage, telle que représentée sur la figure 6. On comprend que dans cette position, la bobine 2 est bloquée en translation dans le sens descendant grâce à la butée 31, et surtout dans le sens ascendant grâce à la coopération entre le ressort torique 35 portant à la fois sur les canelures de la bobine et sur le disque 34.

Le dispositif de blocage axial permet de bloquer la bobine 2 "par en-dessous", et non pas par l'intermédiaire de mécanismes extérieurs, comme dans l'art antérieur.

Le dispositif permettant d'actionner la tige 32 est représenté sur la figure 4 montrant un dispositif qui incorpore le dispositif représenté sur la figure 5 ou 6, ainsi que le mécanisme représenté sur les figures 2 et 3. Les organes et éléments identiques ou similaires portent les mêmes références d'une figure à l'autre.

Une came 40 est prévue solidaire de l'axe fixe 22 et dont la surface profilée est apte à porter contre l'extrêmité d'un levier 41, orthogonal à l'axe fixe 22 (et donc parallèle à l'axe des bobines). Le levier 41 est solidaire d'un bras 42, transversal à ce dernier, et articulé autour d'un axe fixe 43 parallèle à l'axe 22, par l'intermédiaire de deux pattes 44 et 45. L'extrêmité dudit bras 42 est apte à porter contre l'extrêmité inférieure de la tige 32.

Le dispositif de blocage, tel que représenté sur les figures 4, 5 et 6, est lié aux mécanismes de chargement/déchargement de la cassette, en ce sens que le mouvement du réceptacle 1 provoque le mouvement des pièces mobiles du dispositif de blocage, et ce à un instant déterminé du cycle chargement/déchargement de la cassette.

Ainsi, lorsque la cassette, et donc le réceptacle 1, passe de la position de repos (figure 2) à la position de travail (figure 3), la came 40 est entraînée en rotation autour de l'axe 22, et le levier 41 portant sur celle-ci est amené, en fin de descente du réceptacle 1, à pivoter autour de l'axe 43 ; ce faisant, le bras 42 est lui-même entraîné en rotation autour du même axe, et il vient donc porter contre l'extrêmité inférieure de la tige 32 pour soulever celle-ci ; la tige est alors dans une position telle que représentée sur la figure 5, puis, le réceptacle continuant de descendre (et la came 40 à tourner), le bras 42 est amené à tourner dans l'autre sens, ce qui provoque le mouvement descendant de la tige 32, sous l'effet d'un ressort de rappel 50 prévu à la base de la tige 32. La tige 32, étant déplacée verticalement d'un mouvement descendant, provoque l'extension radiale du ressort torique 35 qui prend la position de blocage représentée sur la figure 6.

Inversement, pour décharger la cassette, le réceptacle est amené à passer de la position de travail (figure 3) à la position de repos (figure 2), et lors de ce cheminement inverse, le bras 42 est amené à tourner autour de l'axe 43 de manière à soulever la tige 32, libérant ainsi, par contraction radiale du ressort torique 35, les cannelures de la bobine 2 et libérant cette dernière.

Sur la figure 4, on a représenté un dispositif de blocage pour une bobine, étant bien entendu qu'un enregistreur est en réalité pourvu d'un dispositif identique pour l'autre bobine, disposé de l'autre côté de l'axe de symétrie 55.

Un premier aspect de l'invention est décrit ci-après en référence aux figures 7 et 8 montrant respectivement en coupe une bobine et les moyens d'entrainement selon l'invention, et une vue partielle de dessus du dispositif de la figure 7.

Un but de l'invention, selon ce premier aspect, est d'entrainer la bobine 2 sans jeu.

Les organes et éléments représentés sur les figures 7 et 8 qui sont similaires ou ayant la même fonction que ceux des figures 1 à 6, portent les mêmes références. C'est ainsi qu'on retrouve la bobine 2 son logement interne 25, le pignon d'entrainement 26, muni de son embase 30 et des moyens de butée 31, les cannelures 28 disposées dans le logement axial 25 de la bobine.

De manière avantageuse, selon un second aspect de l'invention, le dispositif comporte également les moyens de blocage axial décrit ci-dessus ; étant entendu que cette disposition est facultative.

Le dispositif d'entrainement sans jeu comprend d'une part un doigt d'entrainement radial 60 apte à coopérer avec les rainures 28 de la bobine, et d'autre part une goupille axiale 61.

Le doigt d'entrainement radial 60 fait saillie par rapport à la surface axiale du pignon d'entrainement et présente une forme sensiblement complémentaire (au moins à son extrêmité) de celle des logements des rainures 28. Le doigt d'entrainement radial 60 et la goupille axiale 61 sont de préférence disposés selon un diamètre du pignon d'entrainement ; ladite goupille de calage présente une surface d'extrêmité de forme cônique et de dimensions sensiblement complémentaires à celles du logement tel que 64 des cannelures de la bobine 2.

La goupille axiale 61 est associée à un ressort 63 disposé à son extrêmité inférieure (opposée à celle de la bobine) de manière à exercer une force sur la goupille tendant à la déplacer vers les canelures.

Le fonctionnement du dispositif d'entraînement sans jeu selon l'invention est décrit ci-après.

Lorsque la bobine, entrainée par le mouvement du réceptacle, atteint les butées 31 des moyens d'entrainement, le doigt radial d'entrainement 60 pénètre à l'intérieur d'un logement 64 des canelures 28a et 28b; le doigt présente un certain jeu dans ledit logement. A cette fin, le diamètre du doigt radial 60 est légèrement inférieur à celui de la largeur de chaque logement 64. La disposition réciproque angulaire du doigt radial 60 et de la goupille axiale est telle que, lorsque le doigt d'entraînement 60 est disposé dans un logement 64 de la cannelure 28, la goupille axiale 61 pénètre partiellement dans un logement 65 des cannelures 28 et porte par son extrêmité cônique en partie sur la base des parties saillantes de la cannelure 28 ; ainsi, par l'effet du ressort 63 et de la surface cônique de l'extrêmité de la goupille, cette dernière tend à se soulever et décaler angulairement la bobine dans un sens ou dans l'autre de manière à ce que le doigt d'entraînement vienne en butée contre le bord du logement 64 dans lequel il est disposé ; la goupille tend à pénétrer plus avant dans le logement 65 correspondant de la cannelure 28. La bobine se trouve alors bloquée contre le doigt d'entraînement 60 et contre la goupille 61 de calage sans aucun jeu angulaire.

## Revendications

1. Dispositif pou l'entrainement en rotation d'une bobine (2) de cassette (1) à bande, ledit dispositif étant du type comprenant un pignon d'entrainement (26) pourvu d'au moins un doigt d'entrainement (60) apte à coopérer avec des rainures axiales (28) prévues sur la bobine (2) et la largeur du doigt (60) étant légèrement inférieure à celle des rainures (28), caractérisé en ce que ledit dispositif comprend des moyens de calage (61) aptes à exercer une force tangentielle sur la bobine, afin de maintenir en butée ledit doigt (60) contre une face de la rainure (28) correspondante.

2. Dispositif selon la revendication 1, caractérisé en ce que lesdits moyens de calage sont constitués d'une goupille mobile (61) dont l'extrémité porte, en partie, contre le bord d'une rainure (28) par une surface inclinée, de manière que le déplacement de la goupille (61) entraine un déplacement angulaire de la rainure (28) de la bobine (2).

3. Dispositif selon la revendication 2, caractérisé en ce que la goupille de calage (61) est apte à se déplacer, sous l'action d'un ressort (63), suivant une direction axiale.

4. Dispositif selon la revendication 2, caractérisé en ce que la goupille de calage (61) comprend une surface de contact avec la rainure (28), en forme de cône.

5. Dispositif selon l'une des revendications 2 à 4, caractérisé en ce que la goupille de calage (61) et ledit doigt d'entrainement (60) sont disposés sensiblement selon un diamètre.

6. Dispositif selon la revendication 1, caractérisé en ce qu'il comporte une butée axiale (31) contre laquelle est susceptible de porter la bobine (2), cette dernière étant pourvue d'un logement central (25) et d'au moins un appui (28) faisant saillie radialement vers l'intérieur dudit logement et ledit dispositif comporte au moins un organe de blocage (35), lié audit pignon (26), ledit organe de blocage étant mobile sous l'action de moyens de commande (32, 34, 41), entre une position de repos effacée et une position de blocage où il porte sur l'extrémité axiale dudit appui (28) opposée à ladite butée (31), afin que la bobine soit également bloquée axialement.

7. Dispositif selon la revendication 6, caractérisé en ce qu'il comprend au moins deux couples organe de blocage (35) /appui (28), disposés selon un diamètre.

8. Dispositif selon l'une des revendications 6 et 7, caractérisé en ce lesdits organes de blocage (35) portent contre une surface inclinée (36) liée audit pignon (26).

9. Dispositif selon l'une des revendications 6 à 8, caractérisé en ce qu'il comprend en outre des moyens de rappel desdits organes de blocage (35) vers la position de repos.

10. Dispositif selon la revendication 8, caractérisé en ce que lesdits organes de blocage (35) sont aptes à porter, en position de blocage, à la fois sur ladite surface inclinée (36) et les appuis (28) correspondants.

11. Dispositif selon l'une des revendications 6 à 10, caractérisé en ce que lesdits organes de blocage sont constitués d'un tore (35) en matériau élastique, tel qu'un ressort torique, coaxial audit pignon (26).

12. Dispositif selon les revendications 8 et 11, caractérisé en ce que lesdits moyens de commande comprennent une tige (32) apte à coulisser par rapport audit pignon (26) et porteuse à une extrémité d'un plateau (34) apte à plaquer ledit ressort (35) sur ladite surface inclinée (36).

13. Dispositif selon l'une des revendications 6 à 12, caractérisé en ce que les appuis sont constitués par les organes entrainés (dents et rainures) (28) de la bobine (2) coopérant avec ledit pignon d'entrainement (26).

14. Dispositif selon l'une des revendications 6 à 13, caractérisé en ce que lesdits moyens de commande (32, 34) sont reliés à un mécanisme de chargement/déchargement de la cassette.

15. Dispositif selon la revendication 12, caractérisé en ce que les moyens de commande comprennent en outre un levier (41) monté à rotation sur un axe fixe (43) et apte à provoquer le déplacement de la tige (32) en portant contre l'extrémité de cette dernière.

16. Dispositif selon la revendication 15, caractérisé en ce que ledit levier (41) est actionné par une came (40) solidaire dudit mécanisme de chargement/déchargement de la cassette (1) et entrainé par celui.ci.

17. Dispositif selon la revendication 12, caractérisé en ce que la tige (32) est associée à des moyens de rappel, tels qu'un ressort (50), vers une position correspondant à la position active des organes de blocage (35).

## Patentansprüche

1. Vorrichtung, um eine Spule (2) einer Bandkassette (1) in Drehung zu versetzen, wobei die Vorrichtung ein Antriebszahnrad (26) aufweist, das mit wenigstens einem Antriebszapfen (60) versehen ist, der dafür ausgelegt ist, mit an der Spule (2) vorgesehenen axialen Nuten (28) zusammenzuwirken, wobei die Breite des Zapfens (60) geringfügig größer als die der Nuten (28) ist, dadurch gekennzeichnet, daß die Vorrichtung Verkeilungsmittel (61) aufweist, die dafür ausgelegt sind, auf die Spule eine Tangentialkraft auszuüben, um den Zapfen (60) in Anlage an einer Seite der entsprechenden Nut (28) zu halten.

2. Vorrichtung nach Anspruch 1, dadurch gekennzeichnet, daß die Verkeilungsmittel durch einen beweglichen Stift (61) gebildet sind, dessen Ende mittels einer geneigten Fläche zum Teil an dem Rand einer Nut (28) anliegt, so daß die Verstellung des Stiftes (61) eine Winkelverstellung der Nut (28) der Spule (2) bewirkt.

3. Vorrichtung nach Anspruch 2, dadurch gekennzeichnet, daß der Verkeilungsstift (61) dafür ausgelegt ist, sich unter der Wirkung einer Feder (63) entlang einer axialen Richtung zu verstellen.

4. Vorrichtung nach Anspruch 2, dadurch gekennzeichnet, daß der Verkeilungsstift (61) eine konusförmige Fläche zur Berührung der Nut (28) aufweist.

5. Vorrichtung nach einem der Ansprüche 2 bis 4, dadurch gekennzeichnet, daß der Verkeilungsstift (61) und der Antriebszapfen (60) im wesentlichen entlang einem Durchmesser angeordnet sind.

6. Vorrichtung nach Anspruch 1, dadurch gekennzeichnet, daß sie einen Axialanschlag (31) enthält, an dem die Spule (2) anliegen kann, wobei letztere mit einer Mittelaufnahme (25) und wenigstens einem Auflager (28) versehen ist, das radial zum Inneren der Aufnahme hervorsteht, wobei die Vorrichtung wenigstens ein Blockierorgan (35) enthält, das mit dem Zahnrad (26) verbunden ist, wobei das Blockierorgan unter der Wirkung von Steuermitteln (32, 34, 41) zwischen einer wirkungslosen Ruhestellung und einer Blockierstellung beweglich ist, in der es an dem zu dem Anschlag (31) entgegengesetzten axialen Ende des Auflagers (28) anliegt, damit die Spule auch axial blockiert ist.

7. Vorrichtung nach Anspruch 6, dadurch gekennzeichnet, daß sie wenigstens zwei Paare Blockierorgan (35)/Auflager (28) enthält, die entlang einem Durchmesser angeordnet sind.

8. Vorrichtung nach einem der Ansprüche 6 und 7, dadurch gekennzeichnet, daß die Blockierorgane (35) an einer mit dem Zahnrad (26) verbundenen geneigten Fläche (36) anliegen.

9. Vorrichtung nach einem der Ansprüche 6 bis 8, dadurch gekennzeichnet, daß sie außerdem Mittel zum Rückstellen der Blockierorgane (35) in die Ruhestellung enthält.

10. Vorrichtung nach Anspruch 8, dadurch gekennzeichnet, daß die Blockierorgane (35) dafür ausgelegt sind, in der Blockierstellung gleichzeitig an der geneigten Fläche (36) und den entsprechenden Auflagern (28) anzuliegen.

11. Vorrichtung nach einem der Ansprüche 6 bis 10, dadurch gekennzeichnet, daß die Blockierorgane durch einen mit dem Zahnrad (26) koaxialen Torus (35) aus einem elastischen Material gebildet sind, z.B. eine torische Feder.

12. Vorrichtung nach den Ansprüchen 8 bis 11, dadurch gekennzeichnet, daß die Steuermittel eine Stange (32) enthalten, die dafür ausgelegt ist, bezüglich des Zahnrades (26) zu gleiten, und die an einem Ende eine Platte (34) trägt, die dafür ausgelegt ist, die Feder (35) auf die geneigte Fläche (36) zu drücken.

13. Vorrichtung nach einem der Ansprüche 6 bis 12, dadurch gekennzeichnet, daß die Auflager durch angetriebene Organe (Zähne und Nuten) (28) der Spule (2) gebildet sind, die mit dem Antriebszahnrad (26) zusammenwirken.

14. Vorrichtung nach einem der Ansprüche 6 bis 13, dadurch gekennzeichnet, daß die Steuermittel (32, 34) mit einem Mechanismus zum Einziehen/Auswerfen der Kassette verbunden sind.

15. Vorrichtung nach Anspruch 12, dadurch gekennzeichnet, daß die Steuermittel außerdem einen Hebel (41) enthalten, der drehbar auf einer feststehenden Achse (43) angebracht ist und dafür ausgelegt ist, die Verstellung der Stange (32) hervorzurufen, indem er an ihrem Ende anliegt.

16. Vorrichtung nach Anspruch 15, dadurch gekennzeichnet, daß der Hebel (41) von einer Kurvenscheibe (40) betätigt wird, die fest mit dem Mechanismus zum Einziehen/Auswerfen der Kassette (1) verbunden ist und von diesem angetrieben wird.

17. Vorrichtung nach Anspruch 12, dadurch gekennzeichnet, daß die Stange (32) mit Mitteln, z.B. einer Feder (50), zum Zurückstellen in eine Stellung-verbunden ist, die der aktiven Stellung der Blockierorgane (35) entspricht.

## Claims

1. A device for rotating a reel (2) of a tape cassette (1), said device being of the type comprising a drive wheel (26) provided with at least one drive finger (60) suitable for co-operating with axial grooves (28) provided in the reel (2), and the width of the finger being slightly smaller than the width of the grooves (28), characterized in that said device further includes wedging means (61) suitable for exerting a tangential force on the reel (2) so as to maintain said finger (60) in abutment against one of the faces of the corresponding groove (28).

2. A device according to claim 1, characterized in that said wedging means are constitued by a moving pin (61), a portion of whose end bears against the side of a groove (28) via a sloping surface such that displacement of the pin (61) gives rise to angular displacement of the reel groove (28).

3. A device according to claim 2, characterized in that the wedging pin (61) is suitable for moving in the axial direction under the action of a spring (63).

4. A device according to claim 2, characterized in that the surface of the wedging pin (61) which comes into contact with the groove (28) is conical in shape.

5. A device according to any one of claims 2 to 4, characterized in that the wedging pin (61) and said drive finger (60) are disposed substantially on the same diameter.

6. A device according to claim 1, characterized in that it includes an axial abutment (31) against which the reel (2) may bear, the reel being provided with a central recess (25), and at least one rest (28) projecting radially inwards from said recess, and said device includes at least one locking member (35) linked to said drive wheel (26), said locking member (35) being moveable under the action of control means (32, 34, 41) between a retracted, rest position, and a working position where it bears against the end of said rest (28) that is axially furthest from said abutment (31) in order to also lock the reel in an axial direction.

7. A device according to claim 6, characterized in that it includes at least two rest (28) and locking (35) member pairs disposed at opposite ends of a diameter.

8. A device according to claim 6 or 7, characterized in that said locking members (35) bear against a sloping surface (36) linked to said wheel (26).

9. A device according to any one of claims 6 to 8, characterized in that it further includes means for returning said locking members (35) towards the rest position.

10. A device according to claim 8, characterized in that said locking members (35) are suitable, when in the locking position, for bearing simultaneously against said sloping surface (36) and against the corresponding rests (28).

11. A device according to any one of claims 6 to 10, characterized in that said locking members are constituted by a torus (35) of resilient material, such as a toroidal spring, disposed coaxially with said wheel (26).

12. A device according to claims 8 and 11, characterized in that said control means comprise a rod (32) suitable for sliding relative to said wheel (26) and carrying a plate (34) at one end suitable for pressing said spring (35) against said sloping surface (36).

13. A device according to any one of claims 6 to 12, characterized in that the rests are constituted by the driven members (teeth and grooves) (28) of the reel (2) which co-operate with said drive wheel.

14. A device according to any one of claims 6 to 13, characterized in that said control means (32, 34) are connected to a cassette (1) loading and unloading mechanism.

15. A device according to claim 12, characterized in that the control means further include a lever (41) mounted to rotate about a stationary axis (43) and suitable for displacing the rod (32) by bearing against the end thereof.

16. A device according to claim 15, characterized in that said lever (41) is actuated by a cam (40) fixed to said cassette (1) loading and unloading mechanism and driven thereby.

17. A device according to claim 12, wherein the rod (32) is associated with return means such as a spring (50) for returning it towards a position corresponding to the active position of the locking members (35).
